# EUROPEAN PATENT SPECIFICATION

(11) **EP 1 244 238 B1**
(45) Date of publication and mention of the grant of the patent: **25.07.2012**
(21) Application number: 02002947.6
(22) Date of filing: 11.02.2002
(51) Int. Cl.: H04L 1/00

(54) **Protection of the descriptive map of the transmission mode in a point-to-multipoint transmission system**
Sicherung der Daten zur Abbildung des Übertragungsmodus in einem Punkt-zu-Mehrpunkt-Übertragungssystem
Protection des données de représentation du mode de transmission dans un système de transmission du type point-multipoints

(30) Priority: 23.03.2001 IT MI010616
(43) Date of publication of application: 25.09.2002
(73) Proprietor: Nokia Siemens Networks Italia S.p.A., 20060 Cassina de Pecchi (IT)
(72) Inventor: Giulio, Cavalli, 20161 Milano (DE); Gaspare, Licitra, 20064 Gorgonzola (IT); Claudio, Santacesaria, 20139 Milano (IT)
(74) Representative: Bruglachner, Thomas E.

(56) References cited:
- WO-A-97/38549
- WO-A-97/48191
- US-A- 6 088 390

## Description

### FIELD OF THE INVENTION

The present invention finds particular application in radio transmission systems with point-to-multipoint topology, but also in other transmission fields on different physical layers, such as optical fibre transmission systems, coaxial cable transmission systems and transmission systems on copper physical support, generally defined copper twisted pair.

The document US-A-6 088 390 (RUSSELL ET AL), 11 July 2000 describes a method and a system which combines a properly designed FEC and the periodic transmission of known symbols to obtain a desired error performance in a point-to-multipoint digital transmission system employing a DFE which induces error propagation.

### BACKGROUND OF THE INVENTION

In transmission systems with point-to-multipoint topology, whichever is the typology of the used physical means, a 'master' station and one or more 'slave' stations called also 'terminals' are generally defined. The following depiction refers to point-to-multipoint radio systems even if it has not to be construed as restrictive, since the invention can be also applied to systems on other physical means or with other topologies.
The communications of the master towards one or more slave stations take place on a channel, defined 'downstream' channel, inside which the master station multiplexes, generally time-division, the traffic for the different stations. The downstream channel is organized in 'frames'.
The traffic of 'slave' stations towards the 'master' station takes place on another channel, called 'upstream' channel. This upstream channel can be frequency- or time- divided from the downstream one, that is, transmissions in upstream direction can occur at the same radio frequency in different time slots or at different radio frequencies.
Other separation techniques can be used between the upstream and downstream channels for other physical layers.
New generation radio systems can control more physical modes. By the term "physical modes" it is intended the combination of modulation and error correction code (FEC). In these systems the master station can transmit with a different physical mode according to the slave station the traffic is addressed to. Moreover, it is possible to change the physical mode during the normal operation of the system, separately for each slave station. Likewise, each slave station can transmit towards the master station with a different physical mode, among those supported by the system.

Time portions dedicated to the transmission of each physical mode are identified in the downstream frame. The above mentioned frame portions are not defined in advance, but have variable length frame by frame, and are dimensioned by the master station according to the traffic requirements in that particular moment.

Having the above mentioned frame portions variable length, it is necessary to supply the slave stations with the information in order that these can know in advance the physical mode of each frame portion in order to correctly demodulate and decode transmitted data. This information can be supplied through a descriptive map of the downstream, more simply called 'downstream map', in which it is specified which portions of the downstream frame are reserved to the different physical modes.

For efficiency reasons, the length of the downstream map is often variable and depends on the number of physical modes with which the master station transmits inside the frame.

A descriptive map of the upstream, more simply called 'upstream map' is also transmitted on the downstream channel. The information relevant to time portions of upstream channel dedicated to the transmission of each single slave station is supplied in the upstream map. The length of the above mentioned upstream map is generally variable, and depends on the number of slave stations that are enabled to transmit in a given time period.

In the known art, downstream and upstream maps are usually transmitted in succession, one after the other. In this case, the generic term "map" means the entity including both the maps, downstream and upstream. As an example of this case of the known art reference can be made to the draft of IEEE standard, group 802.16, concerning the on-air interface of broadband fixed radio access systems, published in December 2000 in paper IEEE802.16.1/D1-2000 under the title "Draft Standard for Air Interface for Fixed Broadband Wireless Access Systems".

In other embodiments, the two maps, downstream and upstream, can be two different entities, located, transmitted and treated independently from each other. For instance, the upstream map might not time-follow the downstream one, but it could be also located in any position in the downstream frame. In other embodiments, one of the two maps could be completely missing.

Later on, reference shall be made to all the downstream and upstream maps by the generic term "map" and when necessary to clarification purposes, explicit reference shall be made to the couple of the two maps transmitted in sequence. The above mentioned assumptions shall not be construed as a restriction, since the present invention is however applicable also to systems with maps of different nature, as can be the case of the situation of two separate maps, located in any two points of the frame or in the case one of the two maps is missing.

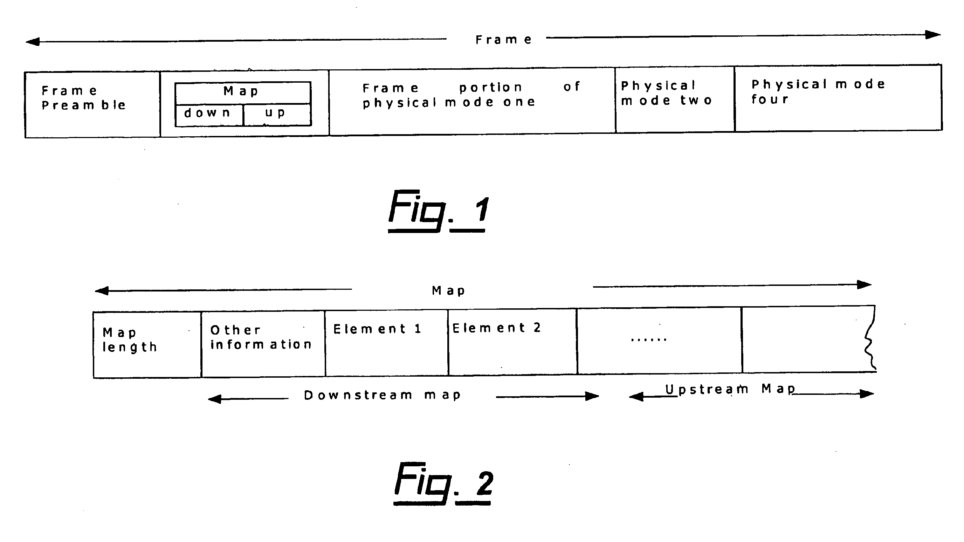

Figure 1 shows a possible frame format, belonging to the known art, in which, after the frame preamble, necessary for synchronization, maps are transmitted. After the maps, different frame portions, one for each physical mode used in that frame, occur in succession. Other frame portions generally present and not significant to the purposes of the present invention are omitted for simplicity.

It can be easily understood how the information contained in the map is of essential importance. Losing the content of the upstream map, by a slave station, involves the loss of transmission occasions; losing the content of the downstream map involves the loss of the whole content of the frame, with possible problems also on the subsequent frames. In fact, the slave station would have no knowledge of the point, inside the frame, where it should start receiving data with a given physical mode. The map has therefore to be protected against possible errors in as robust as possible manner. Another fundamental requirement is that a slave station knows in the shortest time, when the map ends and therefore when data transmission begins. The Applicant did not find, in the known art, common knowledge documents describing or suggesting technical solutions suitable to solve the technical problem of error protection of the map and/or technical solutions suitable to solve the technical problem of identification, by the slave station, of the end of a map and beginning of data transmission.

### OBJECT AND SUMMARY OF THE INVENTION

The present invention applies to systems foreseeing the use of maps transmitted on the downstream channel and defines a technique for the protection of the above-mentioned maps. The featuring aspect of the invention consists in protecting the above-mentioned maps, subdividing them into many FEC blocks having fixed and short length, in order to speed up the process of map decoding and interpretation. An additional novel element is represented by the information relevant to the length of the map located in the first FEC block, so that the slave station, that is receiving the traffic, can know, as soon as possible, the position where the map ends and consequently the position where data transmission starts.

### BRIEF DESCRIPTION OF DRAWINGS

The invention, together with additional objects and advantages thereof can be understood from the following description accompanied with the attached drawings, in which:
**Figure 1** shows the downstream frame with the map and frame portions for the physical modes used in a particular moment;
**Figure 2** shows the map structure with the length information before all the elements.

### DESCRIPTION OF AN EMBODIMENT OF THE INVENTION

In order to protect the maps, error correction techniques, also called FEC, are used. A bit sequence is processed with appropriate techniques and replaced by another sequence, obtained from the first one. The resulting sequence is longer than the original one due to the addition of the coding overhead. The essential property of the above-mentioned FEC codes is to detect and correct possible errors present in the block. According to the code robustness, it is possible to detect and correct a given number of wrong bits. The higher is the code robustness, that is the higher is the correction power, the longer is the sequence resulting from the processing of the original sequence, that is the higher is the overhead.

For map protection, a low decoding delay code is necessary; this means that a slave station has to be able to read and interpret the map in the shortest possible time. Considering the whole map as a unique FEC block, or as several very long FEC blocks, involves numerous disadvantages. In fact, to make a decision on the block correctness, it is necessary first to receive the complete block and then to wait for a processing time to decode the code and only at the end of said processing the map is available; once the map is available, the terminal receiver shall enable the procedures to set up itself for receiving in the physical mode indicated by the map for the first frame portion. This situation is completely unacceptable since the difficulty to decode the map in time to interpret the first frame portions can be easily understood. In some systems of the known art, this leads to the need to introduce guard times or time slots in which transmission occurs with a predetermined physical mode in the first frame portion after the map end.

The invention originates from the following consideration: with an appropriate map format, the first information the terminal needs, that is the information concerning the first frame portions temporally following the map, can be put at the beginning of the map itself.

According to the invention, subdividing the map into several FEC blocks of small size, the decoding of the first block immediately starts as soon as the block has been received and the information contained therein can be immediately used. As small FEC blocks reach the slave station, they are decoded, and the slave station does not need to wait until the whole map is received. This means that the map decoding is performed simultaneously with the reception of the same, while the map is received by the slave station. In this way, the time elapsing from the end of the map and the beginning of the next data considerably reduces up to completely disappear.

An additional novelty consists in inserting, in the first FEC block of the map, the information containing the length of the map itself (figure 2). With such an approach, once the first FEC block received is decoded, the slave station exactly knows when the map ends and consequently when the subsequent data begin. Therefore, (thanks to the invention) it is no more necessary to wait for the processing time of the last FEC block, though small, before starting to receive the data following the map.

The technique described above has also the advantage that should a FEC block be considered incorrect, the map has not to be considered wrong as a whole, but some information within it can be correctly interpreted. Let us take for instance the case in which a slave station has to receive in physical mode number one. It begins receiving the map at a given instant and while FEC blocks arrive, it starts the map decoding. The first information it receives is the length of said map. Once the first FEC block is decoded, the slave station knows when the map ends and data begin. Continuing with the decoding of FEC blocks, the slave station decodes the information relevant to the position of physical mode number one inside the map. At this point, if more errors than the code can correct occur in the reception of any block of the map, the slave station is already in possess of all the elements necessary to synchronize on the frame portion dedicated to the transmission of physical mode number one, and can neglect the remaining map portion it cannot decode due to the rejected blocks.

From studies conducted by the applicant, it resulted that the preferred embodiment of the invention consists in subdividing the map into FEC blocks having length equal to 20 useful bytes plus the coding overhead. The first or the first two bytes of the map shall be dedicated to the information relevant to the map length. Said length can be expressed in different formats: number of bytes, number of elements present in the map or number of FEC blocks forming the map.

Moreover, the length can be unique for downstream and upstream maps or two separate length fields can be used.

In the preferred embodiment, the length is unique for both the maps and is expressed in a number of FEC blocks forming the maps.

Though the invention is described referring to its preferred embodiment, it is evident that variants and modifications are possible for a field technician.

For instance, one of said modifications can consist in changing the size of FEC blocks and/or the format expressing the map length. It is evident that the present invention incorporates those alternative embodiments included in the protection of the following claims.

## Claims

1. Transmission system including at least one master station and one or more slave stations, which send signals to the master station through a first transmission channel or upstream channel and receive signals from the master station through a second transmission channel or downstream channel that transports also at least one descriptive map (Map) identifying time portions dedicated to the transmissions, optionally including information suitable to enable the correct demodulation and decoding of the signals allocated in the downstream channel and, in addition or as an alternative, information suitable to instruct the slave stations on how to share the upstream transmission channel, **characterized in that** said descriptive map (Map) is protected by an error correction code abbreviated with FEC wherein decoding of the first FEC block, out of the blocks in which the map is subdivided, starts as soon as the said first FEC block is received, and the information contained therein is used before the last FEC block is decoded.

2. The system according to claim 1 **characterized in that** said FEC descriptive map protection code includes more FEC blocks having limited dimension, each protecting a segment (Map length, Other information, Element 1, Element 2) of said descriptive map (Map).

3. The system according to claim 2 **characterized in that** the first one of said descriptive map segments (Map length, Other information, Element 1, Element 2) contains a field identifying the length of said descriptive map (Map length).

4. The system according to claim 3 in which the length field (Map length) identifies the length of the whole descriptive map (Map).

5. The system according to claim 3 in which separate length fields identify the length of different parts of the descriptive map (Map) with different functions.

6. The system according to claim 4 **characterized in that** said length field codes the number of FEC blocks used to protect said descriptive map (Map).

7. The system according to claim 5 **characterized in that** each length field codes the number of FEC blocks used to protect the relevant descriptive map portion.

8. The system according to claim 4 **characterized in that** said length field codes the number of bytes forming said descriptive map.

9. The system according to claim 5 **characterized in that** each length field codes the number of bytes forming the relevant map portion.

10. The system according to claim 2 in which said map segment (Map length, Other information, Element 1, Element 2), protected by a FEC block, includes 20 bytes.

11. Master station which receives signals through a first transmission channel or upstream channel and sends signals through a second transmission channel or downstream channel that transports also at least one descriptive map (Map) identifying time portions dedicated to the transmissions, optionally including information suitable to enable the correct demodulation and decoding of the signals allocated in the downstream channel and, in addition or as an alternative, information suitable to instruct the slave stations on how to share the upstream transmission channel, **characterized in that** said descriptive map (Map) is protected by an error correction code wherein the map is subdivided into blocks, the first FEC block is to be decoded as soon as it is received, and the information contained therein to be used before the last FEC block is decoded.

12. Slave station which sends signals to the master station through a first transmission channel or upstream channel and receives signals from the master station through a second transmission channel or downstream channel that transports also at least one descriptive map (Map) identifying time portions dedicated to the transmissions, optionally including information suitable to enable the correct demodulation and decoding of the signals allocated in the downstream channel and, in addition or as an alternative, information suitable to instruct the slave stations on how to share the upstream transmission channel, **characterized in that** said descriptive map (Map) is protected by an error correction code abbreviated with FEC, wherein decoding of the first FEC block, out of the blocks in which the map is subdivided, starts as soon as the said first FEC block is received and the information contained therein is used before the last FEC block is decoded.

## Patentansprüche

1. Übertragungssystem mit mindestens einer Master-Station und einer oder mehreren Slave-Stationen, die durch einen ersten Übertragungskanal oder Upstream-Kanal Signale zu der Master-Station senden und durch einen zweiten Übertragungskanal oder Downstream-Kanal, der außerdem mindestens eine deskriptive Abbildung (Map) transportiert, die den Übertragungen gewidmete Zeitteile identifiziert, Signale von der Master-Station empfangen, die optional Informationen umfassen, die geeignet sind, um die korrekte Demodulation und Decodierung der in dem Downstream-Kanal zugeteilten Signale zu ermöglichen, und zusätzlich oder als Alternative Informationen, die geeignet sind, die Slave-Stationen darüber anzuweisen, wie der Upstream-Übertragungskanal gemeinsam zu benutzen ist, **dadurch gekennzeichnet, dass** die deskriptive Abbildung (Map) durch einen mit FEC abgekürzten Fehlerkorrekturcode geschützt wird, wobei das Decodieren des ersten FEC-Blocks von den Blöcken, in die die Abbildung unterteilt wird, beginnt, sobald der erste FEC-Block empfangen wird, und die darin enthaltenen Informationen verwendet werden, bevor der letzte FEC-Block decodiert wird.

2. System nach Anspruch 1, **dadurch gekennzeichnet, dass** der FEC-Schutzcode der deskriptiven Abbildung mehr FEC-Blöcke mit begrenzter Dimension umfasst, die jeweils ein Segment (Map-Länge, andere Informationen, Element 1, Element 2) der deskriptiven Abbildung (Map) schützen.

3. System nach Anspruch 2, **dadurch gekennzeichnet, dass** das erste der deskriptiven Abbildungssegmente (Map-Länge, andere Informationen, Element 1, Element 2) ein Feld enthält, das die Länge der deskriptiven Abbildung (Map-Länge) identifiziert.

4. System nach Anspruch 3, wobei das Längenfeld (Map-Länge) die Länge der gesamten deskriptiven Abbildung (Map) identifiziert.

5. System nach Anspruch 3, wobei separate Längenfelder die Länge verschiedener Teile der deskriptiven Abbildung (Map) mit verschiedenen Funktionen identifizieren.

6. System nach Anspruch 4, **dadurch gekennzeichnet, dass** das Längenfeld die Anzahl von zum Schutz der deskriptiven Abbildung (Map) verwendeten FEC-Blöcken codiert.

7. System nach Anspruch 5, **dadurch gekennzeichnet, dass** jedes Längenfeld die Anzahl von zum Schutz des relevanten deskriptiven Abbildungsteils verwendeten FEC-Blöcken codiert.

8. System nach Anspruch 4, **dadurch gekennzeichnet, dass** das Längenfeld die Anzahl von die deskriptive Abbildung bildenden Byte codiert.

9. System nach Anspruch 5, **dadurch gekennzeichnet, dass** jedes Längenfeld die Anzahl von den relevanten Abbildungsteil bildenden Byte codiert.

10. System nach Anspruch 2, wobei das Abbildungssegment (Map-Länge, andere Informationen, Element 1, Element 2), das durch einen FEC-Block geschützt wird, 20 Byte umfasst.

11. Master-Station, die durch einen ersten Übertragungskanal oder Upstream-Kanal Signale empfängt und durch einen zweiten Übertragungskanal oder Downstream-Kanal, der außerdem mindestens eine deskriptive Abbildung (Map) transportiert, die den Übertragungen gewidmete Zeitteile identifiziert, Signale sendet, die optional Informationen umfassen, die geeignet sind, um die korrekte Demodulation und Decodierung der in dem Downstream-Kanal zugeteilten Signale zu ermöglichen, und zusätzlich oder als Alternative Informationen, die geeignet sind, um die Slave-Stationen darüber anzuweisen, wie der Upstream-Kanal gemeinsam zu benutzen ist, **dadurch gekennzeichnet, dass** die deskriptive Abbildung (Map) durch einen Fehlerkorrekturcode geschützt wird, wobei die Abbildung in Blöcke unterteilt wird, wobei der erste FEC-Block zu decodieren ist, sobald er empfangen wird, und die darin enthaltenen Informationen zu verwenden sind, bevor der letzte FEC-Block decodiert wird.

12. Slave-Station, die durch einen ersten Übertragungskanal oder Upstream-Kanal Signale zu der Master-Station sendet und durch einen zweiten Übertragungskanal oder Downstream-Kanal, der außerdem mindestens eine deskriptive Abbildung (Map) transportiert, die den Übertragungen gewidmete Zeitteile identifiziert, Signale von der Master-Station empfängt, die optional Informationen umfassen, die geeignet sind, um die korrekte Demodulation und Decodierung der in dem Downstream-Kanal zugeteilten Signale zu ermöglichen, und zusätzlich oder als Alternative Informationen, die geeignet sind, um die Slave-Stationen darüber anzuweisen, wie der Upstream-Übertragungskanal gemeinsam zu benutzen ist, **dadurch gekennzeichnet, dass** die deskriptive Abbildung (Map) durch einen mit FEC abgekürzten Fehlerkorrekturcode geschützt wird, wobei das Decodieren des ersten FEC-Blocks von den Blöcken, in die die Abbildung unterteilt wird, beginnt, sobald der erste FEC-Block empfangen wird, und die darin enthaltenen Informationen verwendet werden, bevor der letzte FEC-Block decodiert wird.

## Revendications

1. Un système de transmission comprenant au moins une station maître et une ou plusieurs stations esclaves qui envoient des signaux à la station maître par l'intermédiaire d'un premier canal de transmission ou canal amont et reçoivent des signaux de la station maître par l'intermédiaire d'un deuxième canal de transmission ou canal aval qui transporte également au moins une carte descriptive (Carte) identifiant des parties temporelles dédiées aux transmissions, contenant éventuellement des informations adaptées de façon à permettre le décodage et la démodulation corrects des signaux attribués au canal aval et, en complément ou en variante, des informations adaptées de façon à donner des instructions aux stations esclaves sur la manière de partager le canal de transmission amont, **caractérisé en ce que** ladite carte descriptive (Carte) est protégée par un code de correction d'erreur, abrégé en FEC, dans lequel le décodage du premier bloc FEC parmi les blocs en lesquels la carte est subdivisée, commence dès que ledit premier bloc FEC est reçu, et les informations contenues dans celui-ci sont utilisées avant que le dernier bloc FEC ne soit décodé.

2. Le système selon la revendication 1 **caractérisé en ce que** ledit code de protection de la carte descriptive FEC comprend d'autres blocs FEC possédant une dimension limitée, chacun d'eux protégeant un segment (Longueur de carte, Autre information, Élément 1, Élément 2) de ladite carte descriptive (Carte).

3. Le système selon la revendication 2 **caractérisé en ce que** le premier segment desdits segments de la carte descriptive (Longueur de carte, Autre information, Élément 1, Élément 2) contient un champ identifiant la longueur de ladite carte descriptive (Longueur de carte).

4. Le système selon la revendication 3 dans lequel le champ longueur (Longueur de carte) identifie la longueur de la totalité de la carte descriptive (Carte).

5. Le système selon la revendication 3 dans lequel des champs longueur distincts identifient la longueur de différentes parties de la carte descriptive (Carte) avec différentes fonctions.

6. Le système selon la revendication 4 **caractérisé en ce que** ledit champ longueur code le nombre de blocs FEC utilisés pour protéger ladite carte descriptive (Carte).

7. Le système selon la revendication 5 **caractérisé en ce que** chaque champ longueur code le nombre de blocs FEC utilisés pour protéger la partie pertinente de la carte descriptive.

8. Le système selon la revendication 4 **caractérisé en ce que** ledit champ longueur code le nombre d'octets formant ladite carte descriptive.

9. Le système selon la revendication 5 **caractérisé en ce que** chaque champ longueur code le nombre d'octets formant la partie pertinente de la carte.

10. Le système selon la revendication 2 dans lequel ledit segment de carte (Longueur de carte, Autre information, Élément 1, Élément 2), protégé par un bloc FEC, comprend 20 octets.

11. Une station maître qui reçoit des signaux par l'intermédiaire d'un premier canal de transmission ou canal amont et envoie des signaux par l'intermédiaire d'un deuxième canal de transmission ou canal aval qui transporte également au moins une carte descriptive (Carte) identifiant des parties temporelles dédiées aux transmissions, contenant éventuellement des informations adaptées de façon à permettre le décodage et la démodulation corrects des signaux attribués au canal aval et, en complément ou en variante, des informations adaptées de façon à donner des instructions aux stations esclaves sur la manière de partager le canal de transmission amont, **caractérisé en ce que** ladite carte descriptive (Carte) est protégée par un code de correction d'erreur, dans lequel la carte est subdivisée en blocs, le premier bloc FEC est à décoder dès qu'il est reçu et les informations contenues dans celui-ci sont à utiliser avant que le dernier bloc FEC ne soit décodé.

12. Une station esclave qui envoie des signaux à la station maître par l'intermédiaire d'un premier canal de transmission ou canal amont et reçoit des signaux de la station maître par l'intermédiaire d'un deuxième canal de transmission ou canal aval qui transporte également au moins une carte descriptive (Carte) identifiant des parties temporelles dédiées aux transmissions, contenant éventuellement des informations adaptées de façon à permettre le décodage et la démodulation corrects des signaux attribués au canal aval et, en complément ou en variante, des informations adaptées de façon à donner des instructions aux stations esclaves sur la manière de partager le canal de transmission amont, **caractérisé en ce que** ladite carte descriptive (Carte) est protégée par un code de correction d'erreur, abrégé en FEC, dans lequel le décodage du premier bloc FEC parmi les blocs en lesquels la carte est subdivisée, commence dès que ledit premier bloc FEC est reçu, et les informations contenues dans celui-ci sont utilisées avant que le dernier bloc FEC ne soit décodé.
